# EUROPÄISCHE PATENTANMELDUNG

(11) **EP 0 903 298 A1**
(43) Veröffentlichungstag der Anmeldung: **24.03.1999**
(21) Anmeldenummer: 98112698.0
(22) Anmeldetag: 09.07.1998
(51) Int. Cl.: B65B 61/20, B65G 47/08

(54) **Verfahren zum Einlegen von Papierstreifen zwischen Produkte in von einer Abteileinheit angeförderten Produktgruppen in Verpackungsmaschinen sowie Vorrichtung zur Durchführung des Verfahrens**

(30) Priorität: 18.09.1997 DE 19740984
(71) Anmelder: KISTERS MASCHINENBAU GMBH, D-47533 Kleve (DE)
(72) Erfinder: Marti, Jean, 47533 Kleve (DE)
(74) Vertreter: Röther, Peter, Dipl.-Phys.

(57) **Zusammenfassung**

Die Erfindung betrifft ein Verfahren und eine Vorrichtung zur quer zur Transportrichtung erfolgenden Verschiebung von Produktzeilen (18) innerhalb von von einer Abteileinheit auf einer Transportstrecke (1) angeförderten Produktgruppen in Verpackungsmaschinen mit mehreren an mindestens einer parallel zur Transportrichtung umlaufenden Kette (2,3) befestigten Schiebemodulen (6), wobei jedes Schiebemodul (6) aus einer Mehrzahl von parallel zueinander quer zur Transportrichtung gleitend gelagerten Schiebern (11) besteht, deren Abstand zueinander stufenlos verstellbar ist, und die Verschiebebewegung der Schieber (11) in Richtung auf die ihnen zugeordneten Produktzeilen (18) und von diesen weg durch Führungsschienen (12,13) erfolgt, die seitlich neben der Transportstrecke (1) verlaufen und an denen die produktabgewandten Enden der Schieber (11) gelagert sind.

## Beschreibung

Die Erfindung betrifft ein Verfahren zum Einlegen von Papierstreifen zwischen Produkte in von einer Abteileinheit angeförderten Produktgruppen in Verpackungsmaschinen.

Die Produktgruppen werden in der Abteilstation gebildet, in die die zu verpackenden Produkte, beispielsweise Getränkeflaschen, in einem mehr oder weniger geordneten Strom angefördert werden.

In der Abteileinheit werden beispielsweise Produktgruppen in rechteckförmiger Anordnung der Produkte aus dem Strom abgeteilt, an die in Transportrichtung hintere Produktzeile legen sich an einer Kette umlaufende Mitnehmerstäbe an und schieben die Gruppen zu nachfolgenden Verpackungsmaßnahmen weiter, beispielsweise in eine Station, in der die einzelnen Gruppen in Trays oder Kartons verpackt bzw. in Folie eingeschlagen werden.

Die Produktgruppen, die verpackt werden sollen, können unterschiedliche Produktanzahlen aufweisen, beispielsweise 20 Flaschen in fünf hintereinander angeordneten Zeilen à 4 Flaschen oder 12 Flaschen in vier hintereinander angeordneten Zeilen à 3 Flaschen.

Auch können die Produktdurchmesser unterschiedlich sein.

Gerade bei Glasflaschen müssen zum Schutz derselben zwischen die Flaschen Streifen aus dickerem Papier oder Pappe eingelegt werden, die mäanderförmig um jeweils benachbarte in Transportrichtung hintereinander angeordnete Flaschen herumgelegt werden, bevor die so vorbereitete Produktgruppe mit der Verpackung versehen wird. Das Einfädeln dieser Papierstreifen gerade bei vollautomatisch arbeitenden Verpackungsmaschinen mit bis zu 100 Verpackungsvorgängen pro Minute ist kompliziert und zeitaufwendig.

Der Erfindung liegt daher die Aufgabe zugrunde, ein Verfahren der eingangs genannten Art so zu führen, daß im laufenden Betrieb der Maschine die Produkte (Flaschen) in der Produktgruppe auf einfache Weise so positioniert werden, daß die Einführung der Papierstreifen ebenfalls vollautomatisch erfdolgen kann.

Eine weitere Aufgabe der Erfindung liegt darin, eine Vorrichtung zur Durchführung des Verfahrens anzugeben.

Die Erfindung löst diese Aufgabe verfahrensgemäß dadurch, daß jeweils zwei benachbarte in Transportrichtung hintereinander angeordnete Produktzeilen der Produktgruppen quer zur Transportrichtung relativ zueinander um einen Produktdurchmesser verschoben werden, in die so entstehenden, in Transportrichtung miteinander fluchtenden Produktzwischenräume die geraden Papierstreifen automatisch eingeführt werden und danach die Querverschiebung der Produktzeilen wieder rückgängig gemacht wird, wodurch sich eine mäanderförmige Anordnung der Papierstreifen zwischen den Produkten der Produktgruppe ergibt.

Die Erfindung löst die Aufgabe vorrichtungsgemäß auf der Grundlage der Merkmale des Oberbegriffs des Patentanspruchs 2 dadurch, daß zwei Führungsschienen nebeneinander angeordnet vorgesehen sind, und jeweils zwei benachbarte Schieber im Schiebermodul unterschiedlichen Führungsschienen zugeordnet sind, und die Führungsschienen zumindest streckenweise unterschiedliche Führungsverlaufsprofile aufweisen, und daß eine Vorrichtung zum Einführen der Papierstreifen vorgesehen ist.

Dabei sind an mindestens einer parallel zur Transportrichtung umlaufenden Kette befestigte Schiebemodule zur quer zur Transportrichtung erfolgenden Verschiebung von Produktzeilen innerhalb von von einer Abteileinheit auf einer Transportstrecke angeförderten Produktgruppen in Verpackungsmaschinen vorgesehen, wobei die Schiebemodule aus einer Mehrzahl von parallel zueinander quer zur Transportrichtung gleitend gelagerten Schiebern besteht, deren Abstand zueinander stufenlos verstellbar ist, und die Verschiebebewegung der Schieber in Richtung auf die ihnen jeweils zugeordneten Produktzeilen und von diesen weg durch Führungsschienen erfolgt, die seitlich neben der Transportstrecke verlaufen und an denen die produktabgewandten Enden der Schieber gelagert sind.

Die beispielsweise im Rechteckverbund abgeteilten Produkte werden mittels Mitnehmerstäben in den Bereich der Vorrichtung gefördert. Die in den Führungsschienen geführten Schieber in den Schiebemodulen verschieben nun einzelne oder auch alle Zeilen der jeweiligen Produktgruppe so, daß jeweils zwei hintereinanderliegende Produktzeilen zueinander um einen Produktdurchmesser versetzt werden. Beim weiteren Vorwärtsfördern der so verstellten Produktgruppen werden die Produktreihen durch in Förderrichtung verlaufende Stege ab Abstand zueinander gebracht. Die Abstände bilden einen Spalt, in den von oben angelieferte Papierstreifen eingelegt werden. Ist der Einlegevorgang, der ebenfalls vollautomatisch erfolgt, beendet, bewegen die Schieber des der Produktgruppe zugeordneten Moduls die versetzten Produktzeilen in die ursprüngliche Rechteckanordnung zurück, wodurch sich die eingelegten Streifen selbsttätig in die mäanderförmige Lage um die Produkte herum legen. Die so vorbereiteten Produktgruppen werden daraufhin in die eigentliche Verpackungsstation gefördert.

Um die Schiebemodule schnell und einfach auf das jeweilige Gruppenformat bzw. die jeweilige Produktgröße umstellen zu können, sieht die erfindungsgemäße Vorrichtung vor, daß die Abstände zwischen den Schiebern des Moduls stufenlos verstellbar sind.

Bei einer bevorzugten Ausführungsform der Vorrichtung geschieht dies gemäß Anspruch 3 dadurch, daß die Schieber jeweils eines Moduls zur gegenseitigen Abstandsverstellung auf einem auf Schienen geführten Scherenmechanismus befestigt sind, wobei jeder Scherenmechanismus einerseits mit einer endlos umlaufenden Kette, die ortsfest angeordnet ist, und andererseits mit einer zweiten endlos umlaufenden Kette verbunden ist, die relativ zur ersten Kette parallel zur Transportrichtung im Ganzen verschiebbar ist.

Jedes Modul verfügt über einen derartigen Scherenmechanismus. Durch Verschieben des einen Kettentriebs gegenüber dem anderen fest angeordneten spreizen sich alle Scheren in den Modulen gleichmäßig auf oder zu, wodurch sich der Abstand der auf dem Scherenmechanismus angeordneten Schieber ebenso gleichmäßig ändert.

Der Versatz zwischen den beiden Ketten bleibt dabei immer so, daß die einzelnen Module beim Erreichen der Kettenumkehrpunkte paternostarähnlich vom Obertrum zum Untertrum der umlaufenden Kette und umgekehrt geführt werden, d.h., daß die durch die Schieber aufgespannte Ebene immer in horizontaler Stellung bleibt.

Die produktabgewandten Enden der Schieber laufen in Führungsschienen, die durch speziell auf die Produktgrößen eingestellte Kurvenverläufe die Aus- und Einfahrbewegung der Schieber steuern.

Der Kurvenverlauf ist dergestalt, daß zunächst alle Schieber den gleichen Abstand zu den ihnen zugeordneten Produktzeilen einnehmen. Zur gegenseitigen Verschiebung benachbarter Produktzeilen werden die ihnen zugeordneten Schieber nun in Kontakt mit der jeweiligen Zeile gesteuert. Ist die gewünschte Positionierung erfolgt, werden die Schieber wieder etwas von den Zeilen wegbewegt, so daß die nun gebildeten Produktreihen durch die obengenannten Stege etwas auseinander bewegt werden können, um Platz für das Einführen der Papierstreifen zu schaffen.

Nach dem Einlegen der Streifen werden die Schieber wieder so gesteuert, daß sie in Kontakt mit den ihnen zugeordneten Produktzeilen kommen und diese wieder in die ursprüngliche Rechteckanordnung bewegen. Dann werden die Schieber wieder in Ausgangsstellung gebracht, überfahren die Kettenumkehrpunkte und werden im Untertrum der Ketten zurück zum Ausgangspunkt gefahren.

Die Produktgruppe gelangt dann in die Verpackungsstation.

Um die Relativverschiebung benachbarter Produktzeilen auf konstruktiv einfache Weise zu gewährleisten, sind jeweils zwei einander benachbarte Schieber jeweils in einer separaten Führungsschiene geführt, wobei die Kurvenverläufe der beiden Führungsschienen entsprechend dem jeweils gewünschten Verschiebehub unterschiedlich aber aufeinander abgestimmt sind.

Um die Führungsschienen schnell auf andere Produktformate bzw. Produktdurchmesser einstellen zu können, sieht die Erfindung gemäß Anspruch 4 vor, daß die Führungsschienen aus einzelnen Segmenten gebildet sind, die über Längenausgleichselernente aneinander angelenkt sind.

Die einzelnen Segmente werden entsprechend dem gewünschten Kurvenverlauf ausgerichtet und in dieser Stellung fixiert. Zum Längenausgleich und zur Fixierung sind zwischen den Segmenten teleskopartige Verbindungselemente vorgesehen, wie es der Anspruch 5 vorschlägt.

Die Ausgleichselemente bilden dabei einen Teil der Führungen.

Die Schieberenden sind beispielsweise mittels Kugellagern oder Gleitlagern an den Führungsschienen geführt.

Die beiden Führungsschienen sind gemäß Anspruch 6 bezüglich ihrer Kurvenführung unabhängig voneinander verstellbar, so daß jeweils benachbarte Schieber unterschiede Hübe ausführen können, um die gewünschte Positionierung der Produktzeilen zu erreichen.

Vorteilhafterweise werden gemäß Anspruch 7 auf beiden Seiten der Transportstrecke erfindungsgemäße Vorrichtungen in spiegelbildlicher Anordnung vorgesehen, so daß zum einen eine bessere Führung der jeweiligen Produktzeilen gewährleistet ist und zum anderen der Verschiebehub halbiert werden kann.

Um einen störungsfreien kontinuierlichen Betrieb der Verpackungsmaschine zu verwirklichen, ist die Modulgeschwindigkeit der Transportgeschwindigkeit der Produktgruppen angepaßt.

Die erfindungsgemäße Vorrichtung hat somit den Vorteil, daß sie allein durch die Verschiebung eines Kettentriebes schnell und auf einfache Weise auf beliebige Produktdurchmesser und Formate eingestellt werden kann. Sie hat darüber hinaus den Vorteil, daß durch die gesteuerte Positionierung der Produktzeilen durch die Schieber im jeweiligen Schiebemodul in kontinuierlichem Betrieb zum Schutz der Flaschen dienende Papierstreifen vollautomatisch in die Produktgruppe eingelegt werden können und auch das mäanderförmige Umschlingen der Flaschen auf vollautomatische Art und Weise geschehen kann, ohne daß hierdurch der Produktionsablauf in irgendeiner Weise gestört würde.

Die Erfindung wird im folgenden anhand von Zeichnungen dargestellt und näher erläutert.

Es zeigen:
- Fig. 1a:: eine erfindungsgemäße Vorrichtung in spiegelbildlicher Anordnung zur Transportstrecke für kleine Formate,
- Fig. 1b:: Vorrichtung gemäß Fig. 1a eingestellt auf große Formate in lediglich einseitiger Anordnung,
- Fig. 2a:: in prinzipieller Darstellung der Verschiebevorgang der einzelnen Produktzeilen bei kleinem Format,
- Fig. 2b:: Darstellung gemäß Fig. 2a jedoch für Produkte größeren Formats,
- Fig. 3a:: ein Schiebemodul in Draufsicht,
- Fig. 3b:: Schiebemodul gemäß Fig. 3a in Seitenansicht,
- Fig. 4:: Führungsschienen-Segmentverbindung.

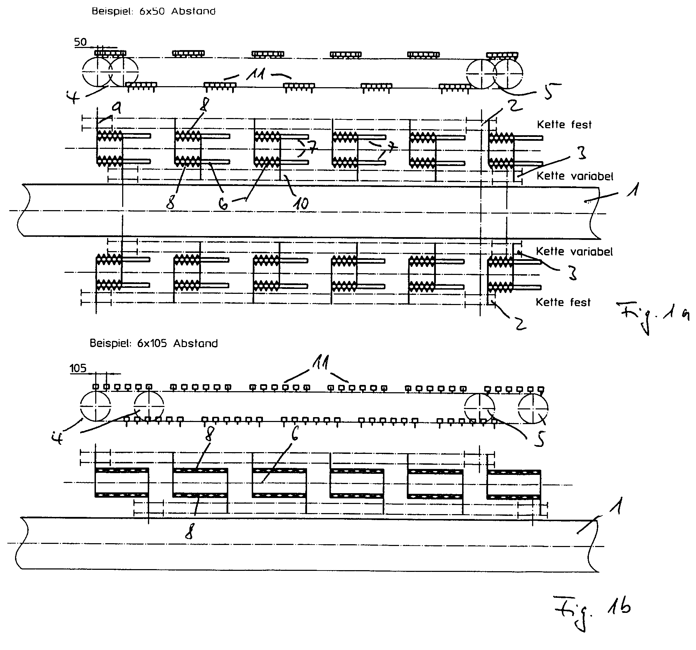

In der Fig. 1a und der Fig. 1b ist eine Transportstrecke 1 in einer ansonsten nicht weiter dargestellten Verpackungsmaschine dargestellt, wobei dieser Teil der Transportstrecke zwischen einer nicht dargestellten Abteileinheit und einer ebenfalls nicht dargestellten Verpackungsstation angeordnet ist.

Seitlich neben der Transportstrecke 1 sind zwei versetzt zueinander angeordnete Ketten 2 und 3 angeordnet, die in Transportrichtung endlos umlaufen. Die die Umkehrpunkte bildenden Kettenräder 4 und 5 sind lediglich schematisch dargestellt.

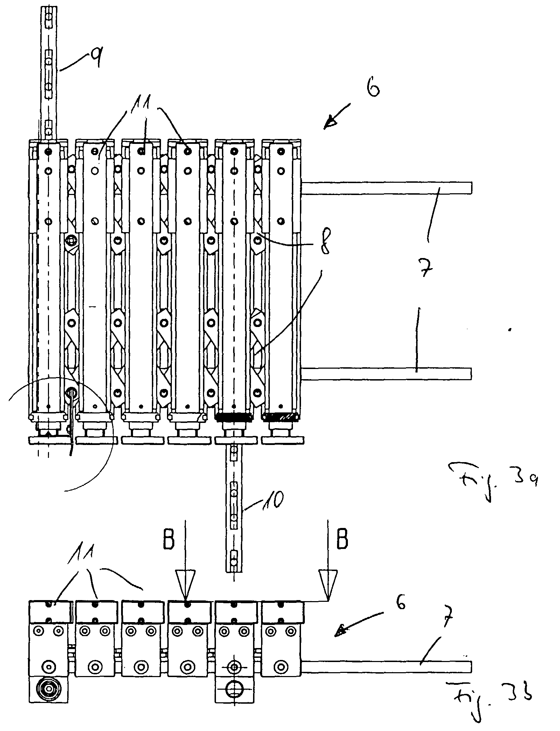

Zwischen den Ketten 2 und 3 sind Schiebemodule 6 angeordnet, die, wie deutlich aus Fig. 3a und 3b hervorgeht, aus zwei parallel zueinander angeordneten, auf Schienen 7 verschiebbaren Scherenmechanismen 8 bestehen. Der in Transportrichtung hintere Bereich des Scherenmechanismus 8 ist über eine Stange 9 mit der Kette 2 verbunden, während der in Transportrichtung vordere Bereich des Scherenmechanismus 8 über eine Stange 10 mit der Kette 3 fest verbunden ist. Die Kette 2 ist ortsfest angeordnet, während die Kette 3 um den Abstand zwischen den Stangen 9 und 10 in Transportrichtung versetzt zur Kette 2 und im ganzen in Transportrichtung verschiebbar angeordnet ist. Auf den Scherenmechanismen 8 sind quer zur Transportrichtung und parallel zueinander sechs Schieber 11 befestigt. Die Schieber 11 sind quer zur Transportrichtung gleitend gelagert und mit ihren von der Transportstrecke 1 abgewandten Enden in Führungsschienen 12, 13 in Transportrichtung frei verschiebbar gelagert.

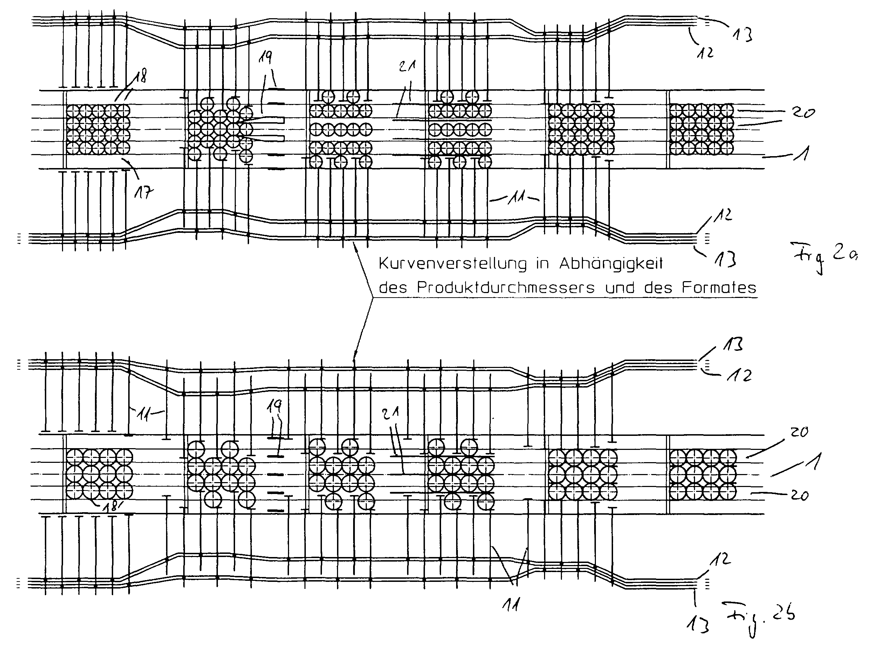

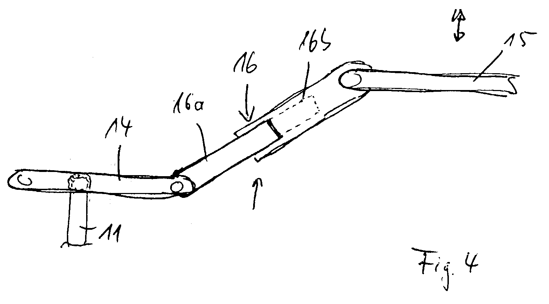

In den Fig. 2a und 2b ist der Kurvenverlauf der Führungsschienen 12 und 13 dargestellt, wobei die Schieber 11 lediglich schematisch angedeutet sind. Der zur Abstandsverstellung zwischen den einzelnen Schiebern 11 vorgesehene Scherenmechanismus ist hier nicht dargestellt. Die Führungsschienen 12 und 13 bestehen aus einzelnen Segmenten 14, 15 (Fig. 4), die durch Verbindungselemente 16 gelenkig verbunden sind. Zum Längenausgleich bei der zur Herstellung des entsprechenden Kurvenprofils erforderlichen Verstellung der Segmente 14 und 15 ist das Verbindungselement 16 zweiteilig ausgeführt, wobei der Teil 16a teleskopartig verschiebbar im Teil 16b des Verbindungselements 16 angeordnet ist. Das Verbindungselement 16 bildet dabei einen Teil des Führungsprofils.

Wie aus den Fig. 2a und 2b hervorgeht, weisen die Führungsschienen 12 und 13 streckenweise unterschiedliche Kurvenverläufe auf. Der Führungsschiene 12 sind im vorliegenden Ausführungsbeispiel der zweite, vierte und sechste Schieber 11 und der Führungsschiene 13 der erste, dritte und fünfte Schieber 11 zugeordnet. Die Führungsschienen 12 und 13 mit den von ihnen gesteuerten Schiebemodulen 6 sind in spiegelbildlicher Weise sowohl auf der einen als auf der anderen Seite der Transportstrecke angeordnet. Auf der Transportstrecke werden in der Ausgangsstellung rechteckförmig angeordnete Produktgruppen 17 von der nicht dargestellten Abteileinheit über die Transportstrecke 1 zu der ebenfalls nicht dargestellten Verpackungsstation transportiert. In der Ausgangslage (in der Fig. links) ist die Rechteckanordnung der Produktgruppe 17 noch ungestört. Die Schieber befinden sich noch neben der Transportstrecke 1 in konstantem Abstand zu den ihnen zugeordneten Produktzeilen 18.

Durch den gewählten Kurvenverlauf der Führungsschienen 12 und 13 bewegen sich die Schieber 11 im Verlauf der Bewegung der Ketten 2 und 3 von links und von rechts auf die ihnen zugeordneten Produktzeilen 18 zu und verschieben einander benachbarte Produktzeilen 18 jeweils um einen halben Produktdurchmesser zueinander. Die Absolutverschiebung der Produktzeilen zueinander beträgt somit einen vollen Produktdurchmesser. Auf ihrem weiteren Transportweg treffen die Produktgruppen nun auf in der Transportstrecke 1 angeordnete längsverlaufende Stege 19, die zwischen den nun neu gebildeten Produktreihen 20 einen Abstand herstellen. In die hierdurch entstehenden Spalte zwischen den Produktreihen 20 wird von einer nicht dargestellten Vorrichtung von oben eine entsprechende Anzahl von Papierstreifen 21 eingelegt. In diesem Bereich ist der Kurvenverlauf der Führungsschienen 12, 13 so gewählt, daß die Schieber 11 die durch die Stege 19 hervorgerufene seitliche Bewegung der Produkte nicht stören.

Sobald die Streifen 21 eingelegt sind, werden die Schieber 11 durch entsprechende Kurvenführung der Führungsschienen 12, 13 wieder auf die ihnen zugeordneten Produktzeilen 18 zubewegt und schieben die Zeilen aus der versetzten Stellung wieder in eine Position, so daß sich die ursprünglich rechteckförmige Anordnung der Produkte wieder ergibt, wobei sich hierdurch die Papierstreifen 21 selbsttätig mäanderförmig um einander benachbarte Produkte herumlegen.

Die so vorbereitete Produktgruppe wird dann in die Verpackungsstation gefördert.

In der Fig. 2a weisen die Schieber einen Abstand zueinander auf, der der Darstellung in Fig. 1a entspricht, während in Fig. 2b die Schieber einen Abstand zueinander aufweisen, der dem in Fig. 2b dargestellten entspricht.

Die Wahl des Abstandes der Schieber 11 zueinander hängt - wie aus den Figuren hervorgeht - von dem Produktdurchmesser und der Anzahl der Produktzeilen 18 ab.

## Patentansprüche

1. Verfahren zum Einlegen von Papierstreifen zwischen Produkte in von einer Abteileinheit angeförderten Produktgruppen in Verpackungsmaschinen, wobei jeweils zwei benachbarte in Transportrichtung hintereinander angeordnete Produktzeilen der Produktgruppen quer zur Transportrichtung relativ zueinander um einen Produktdurchmesser verschoben werden, in die so entstehenden, in Transportrichtung miteinander fluchtenden Produktzwischenräume die geraden Papierstreifen automatisch eingeführt werden und danach die Querverschiebung der Produktzeilen wieder rückgängig gemacht wird, wodurch sich eine mäanderförmige Anordnung der Papierstreifen zwischen den Produkten der Produktgruppe ergibt.

2. Vorrichtung zur Durchführung des Verfahrens nach Anspruch 1, mit an mindestens einer parallel zur Transportrichtung umlaufenden Kette (2,3) befestigten Schiebemodulen (6) zur quer zur Transportrichtung erfolgenden Verschiebung von Produktzeilen (18) innerhalb von von einer Abteileinheit auf einer Transportstrecke (1) angeförderten Produktgruppen in Verpackungsmaschinen, wobei die Schiebemodule (6) aus einer Mehrzahl von parallel zueinander quer zur Transportrichtung gleitend gelagerten Schiebern (11) besteht, deren Abstand zueinander stufenlos verstellbar ist, und die Verschiebebewegung der Schieber (11) in Richtung auf die ihnen jeweils zugeordneten Produktzeilen (18) und von diesen weg durch Führungsschienen (12,13) erfolgt, die seitlich neben der Transportstrecke (1) verlaufen und an denen die produktabgewandten Enden der Schieber (11) gelagert sind,
dadurch gekennzeichnet,
daß zwei Führungsschienen (12,13) nebeneinander angeordnet vorgesehen sind, und jeweils zwei benachbarte Schieber (11) im Schiebermodul unterschiedlichen Führungsschienen (12,13) zugeordnet sind, und die Führungsschienen (12,13) zumindest streckenweise unterschiedliche Führungsverlaufsprofile aufweisen, und daß eine Vorrichtung zum Einführen der Papierstreifen vorgesehen ist..

3. Vorrichtung nach Anspruch 2,
dadurch gekennzeichnet,
daß die Schieber (11) jeweils eines Moduls (6) zur gegenseitigen Abstandsverstellung auf einem auf in Transportrichtung sich erstreckenden Schienen (7) geführten Scherenmechanismus (8) befestigt sind, wobei jeder Scherenmechanismus (8) einerseits mit einer endlos umlaufenden ersten Kette (2), die ortsfest angeordnet ist, und andererseits mit einer endlos umlaufenden zweiten Kette (3) verbunden ist, die relativ zur ersten Kette (2) parallel zur Transportrichtung im Ganzen verschiebbar ist.

4. Vorrichtung nach Anspruch 2 oder 3,
dadurch gekennzeichnet,
daß die Führungsschienen (12,13) aus einzelnen Segmenten (14,15) gebildet sind, die über Längenausgleichselemente (16) aneinander angelenkt sind.

5. Vorrichtung nach Anspruch 4,
dadurch gekennzeichnet,
daß die Ausgleichselemente (16) zweiteilig ausgebildet sind, wobei ein Ende des einen Teils (16a) teleskopartig im diesem zugeordneten Ende des anderen Teils (16b) verschiebbar ist.

6. Vorrichtung nach einem der Ansprüche 2 bis 5,
dadurch gekennzeichnet,
daß zwei Führungsschienen (12,13) bezüglich ihrer Kurvenführung unabhängig voneinander verstellbar sind.

7. Vorrichtung nach einem der Ansprüche 2 bis 6,
gekennzeichnet durch
spiegelbildliche Anordnung auf jeder Seite der Transportstrecke (1).

8. Vorrichtung nach einem der Ansprüche 2 bis 7,
dadurch gekennzeichnet,
daß die Modulgeschwindigkeit der Transportgeschwindigkeit der Produktgruppen angepaßt ist.
